Europäisches Patentamt

European Patent Office

Office européen des brevets

(19)

(11) Veröffentlichungsnummer: **0 493 580 B1**

# EUROPÄISCHE PATENTSCHRIFT

(12)

(45) Veröffentlichungstag der Patentschrift: **07.09.94**

(51) Int. Cl.⁵: **B23B 51/10**

(21) Anmeldenummer: **91913832.1**

(22) Anmeldetag: **25.07.91**

(86) Internationale Anmeldenummer:
**PCT/EP91/01414**

(87) Internationale Veröffentlichungsnummer:
**WO 92/02327 (20.02.92 92/05)**

(54) **FASSCHNEIDENEINSATZ.**

(30) Priorität: **27.07.90 DE 9011120 U**

(43) Veröffentlichungstag der Anmeldung:
**08.07.92 Patentblatt 92/28**

(45) Bekanntmachung des Hinweises auf die
Patenterteilung:
**07.09.94 Patentblatt 94/36**

(84) Benannte Vertragsstaaten:
**AT CH DE FR GB IT LI SE**

(56) Entgegenhaltungen:
**WO-A-90/04474**
**US-A- 2 437 364**
**US-A- 2 899 851**

(73) Patentinhaber: **MAS MASCHINENBAU AG**

**CH-9475 Sevelen (CH)**

(72) Erfinder: **NIGG, Leo**
**Tiergartenweg 15**
**CH-9470 Buchs (CH)**
Erfinder: **NIGG, Hansuli**
**Tiergartenweg 19**
**CH-9470 Buchs (CH)**

(74) Vertreter: **Petra, Elke, Dipl.-Ing. et al**
**Will & Petra,**
**Rechts- und Patentanwälte,**
**Neue Poststrasse 21**
**D-85598 Baldham (DE)**

Rank Xerox (UK) Business Services
(3.10/3.09/3.3.3)

EP 0 493 580 B1

## Beschreibung

Die Erfindung bezieht sich auf einen Fasschneideneinsatz für einen Faskopf eines Bohr-/Faswerkzeuges gemäß Oberbegriff des Anspruchs 1.

Bei häufig verwendeten Bohr-/Faswerkzeugen werden Fasschneideneinsätze eingesetzt, die auf an den Spiralbohrern fixierten Haltern befestigt sind. So zeigt z.B. die DE-PS 348 850 ein Bohr-/Faswerkzeug, bei welchem auf die Spiralbohrer zwei diagonal gegenüberliegende Fasschneideneinsätze in die Spannuten der Spiralbohrer anliegend eingreifen und gegen deren Flächen durch entsprechende Druckflächen eines den Bohrer umfassenden Spannfutters angedrückt werden. Abgesehen davon, daß die zur Anwendung kommenden Fasschneideneinsätze nur einseitige Fasschneideneinsätze sind, die zudem eine den Spannuten angepaßte Form aufweisen müssen, wird auch der freie Spänefluß in den Spannuten behindert.

Aus der DE-OS 28 00 077 ist ein Schneidkopf bekannt, bei dem der Bohrer in einem Werkzeughalter aufgenommen ist, der an seiner Vorderseite einen eingearbeitete Fasschneiden aufweisenden Schneidkopf (Kegelsenker) trägt. Die Fixierung des Bohrers erfolgt durch radiale Madenschrauben im Schneidkopf, die in die Flanken des Bohrers eingreifen. Bei Bruch oder notwendigem Nachschleifen der am Schneidkopf ausgebildeten Schneiden muß der Schneidkopf selber vom Werkzeughalter entfernt und gegen einen neuen oder nachgeschliffenen Schneidkopf ausgetauscht werden.

Aus der DE-OS 36 10 016 ist ein Stufenbohrer bekannt, bei dem auf das Bohrwerkzeug ein axial geschlitzter Stufenbohrer aufgeklemmt ist. Zwei am Stufenbohrring über Fixierschrauben befestigte Wendeplatten stehen in am Bohrwerkzeug vorgesehenen Haltenuten an, wodurch diese in Drehrichtung angestützt bzw. mitgenommen werden. Dieser Stufenring ist infolgedessen nicht für die Verwendung auf normalen Spiralbohrern geeignet, sondern nur im Zusammenhang mit Spezialwerkzeugen verwendbar.

Schließlich ist aus der WO-90/04474 ein Bohr-/Faswerkzeug bekannt, das einen Werkzeughalter aufweist, der an seinem vorderen Ende einen Faskopf und einen handelsüblichen Bohrer mit Zylinderschaft trägt, mit entsprechenden Einstell- und Spannelementen, bei dem der Faskopf um 360° schwenkbar um die Werkzeugachse angeordnet ist, während im Faskopf zwei Fasschneideneinsätze diagonal gegenüberliegend und an den Durchmesser des Spiralrückens des Bohrers im wesentlichen im Faswinkel einstellbar, gespannt angeordnet sind. Die Fasschneideneinsätze weisen Dreikant-Hartmetall-Schneidkörper auf, die in entsprechenden prismatischen Groß-Führungen durch je ein auf eine geneigte Spannfläche an der entsprechenden oberen Längskante einwirkendes Klemmstück festgehalten werden. Sie sind zudem an den oberen Längskanten jeweils zum Kantenende hin seitenversetzt mit je einer Schneide versehen. Zwar wird hier durch die genaue Anlage der Fasschneideneinsätze auf dem Spiralrücken und das Nichtherausragen der Spannelemente und der Schneiden aus dem Faskopfumfang ein Spänestau optimal vermieden. Jedoch kann durch die Dreikant-Körperform, wobei möglicherweise der Dreikant-Preßrohling an den Führungsteilen unbearbeitet bleibt, insbesondere durch Bearbeitungsgenauigkeit der beiden Fasschneiden zueinander und im Verhältnis zu den Körperführungsflächen der Fasschneideneinsätze und durch Führungsgenauigkeit in der V-Führung, ein Planschlag der Schneiden unter 0,05 mm nicht realisiert werden. Auch ist die Herstellung dieser bekannten, prismatischen Fasschneideneinsätze relativ kostenintensiv, da jede Führungsfläche und die Schneiden-Freiflächenfasen separat geschliffen werden müssen.

Aufgabe der Erfindung ist es, einen Fasschneideneinsatz oben genannter Gattung anzugeben, der schnell und kostengünstig und mit hoher Genauigkeit herstellbar ist und durch den gleichzeitig ein Schnellwechsel mit optimaler Positionierung und minimalem Einbau-Planschlag sichergestellt ist.

Diese Aufgabe wird durch einen Fasschneideneinsatz mit den Merkmalen des Anspruch 1 gelöst. Weitere Ausgestaltungen sind in den Unteransprüchen aufgezeigt.

Demgemäß ist der erfindungsgemäße Fasschneideneinsatz als Vierkant-Körper ausgebildet, mit einer Oberseite, einer gegenüberliegenden Auflagefläche und zwei auf Körperbreite zueinander gegenüberliegenden Seiten- bzw. Führungsflächen, wobei die Auflagefläche und die Seiten- bzw. Führungsflächen zum spielfreien Zusammenwirken mit einem im Faskopf vorgesehenen U-förmigen Aufnahme- und Führungsprofil ausgelegt sind. Hierdurch ist die Möglichkeit einer spielfreien Verschiebung in Längs- bzw. seitlichen Anstellrichtung der Fasschneide gegeben.

Zudem geht jede Schneidkante in eine Freiflächenfase über, die an eine mit der Oberseite einen spitzen Winkel bildende Freifläche grenzt.

Auch sind die auf Körperbreite B zueinanderliegenden Führungsflächen des Fasschneideneinsatzes und die auf Schneidkantenabstand B' zueinander liegenden Freiflächenfase b, d der Schneidkanten jeweils zueinander maß- und toleranzgleich und in gleicher Ebene liegend angeordnet.

Durch die an sich bekannte Spannung der Fasschneiden über die an den oberen Vierkantkörper-Ecken vorgesehenen 45°-Flächen wird durch die U-Führung sichergestellt, daß die jeweilige Fasschneide in die diagonal gegenüberliegende Ecke der U-Führungsaufnahme des Faskopfes eingeschoben wird, so daß die jeweilige Schneide bei Wechsel oder Verschiebung des Fasschneideneinsatzes immer in der gleichen Stellung gespannt wird. Es kommen folglich keine Fertigungstoleranzen zum Tragen, da die seitlichen Führungsflächen der Fasschneideneinsätze mit den entsprechenden Schneiden bzw. deren Freiflächenfasen schlagfrei auf Gleichmaß geschliffen sind. Hierdurch wird ein minimaler Planschlag in montiertem Zustand von unter 0,05 mm erreicht.

Erfindungsgemäß ist des weiteren von Vorteil, wenn zur Erhöhung der Standzeit jeweils die Schneiden-Schneidkeile mit deren Fasen (a + c bzw. b + d) und die Oberseite und die Auflage- und die Führungsflächen des Körpers bearbeitet und die übrigen Flächen des Preßrohlings unbearbeitet bleiben. Dabei kann eine besonders hohe Genauigkeit der Schneidengeometrie und praktisch Schlagfreiheit des gesamten Werkzeugs erzielt werden, wenn zuerst die untere Auflagefläche und die obere Fläche, die zueinander parallel liegen, geschliffen, dann die dazu senkrecht stehenden beiden seitlichen Führungsflächen zusammen mit den entsprechenden Schneiden-Freiflächenfasen bearbeitet werden, wonach die Negativfasen mit Winkel $\beta$ beispielsweise auf 25° geschliffen und schließlich die Freiwinkel $\alpha$ genau eingeschliffen werden, so daß ein genauer Schneidenabstand B' eingehalten werden kann.

Zusammenfassend kann gesagt werden, daß erfindungsgemäß die Formgestaltung des Fasschneideneinsatzes eine spielfreie Verschiebung in Längsrichtung des Fasschneideneinsatzes bzw. deren Aufnahme ermöglicht, wodurch immer eine optimale Anlage des Fasschneideneinsatzes durch dessen Spitze am Spiralrücken (Hinterschliff) des Spiralbohrers gesichert ist. Dadurch wird erreicht, daß auch bei verschiedenen Durchmessern der Spiralbohrer eines Bohr-/Faswerkzeugs keine Freiräume entstehen, in denen sich Späne festsetzen können. Gleichzeitig wird durch die Spannlage der Fasschneideneinsätze an den jeweiligen auf der Schneidenseite angeordneten, plangleichen Führungsflächen ein minimaler Planschlag sichergestellt.

Von besonderem Vorteil ist, daß fast alle Schleifvorgänge nicht immer nur an einem einzelnen Fasschneideneinsatz durchgeführt werden, sondern daß jeweils mehrere gleiche Fasschneideneinsätze (bis zu 1.000) in gleicher Aufspannung gleichzeitig maßgenau an Führungsflächen und Freiflächenfase geschliffen werden können, was eine Produktionssteigerung und somit eine erhebliche Kostenreduzierung des Werkzeugs bedeutet.

Nachfolgend wird die Erfindung anhand eines Ausführungsbeispieles unter Bezug auf die Zeichnung näher beschrieben.

Es zeigt:

Fig. 1    einen Fasschneideneinsatz in Draufsicht,

Fig. 2    eine Ansicht nach Pfeil A aus Fig. 1, eine Stirnfläche des Fasschneideneinsatzes darstellen, und

Fig. 3    eine Einzelheit X aus Fig. 2 mit vergrößerter Darstellung der Hauptschneide.

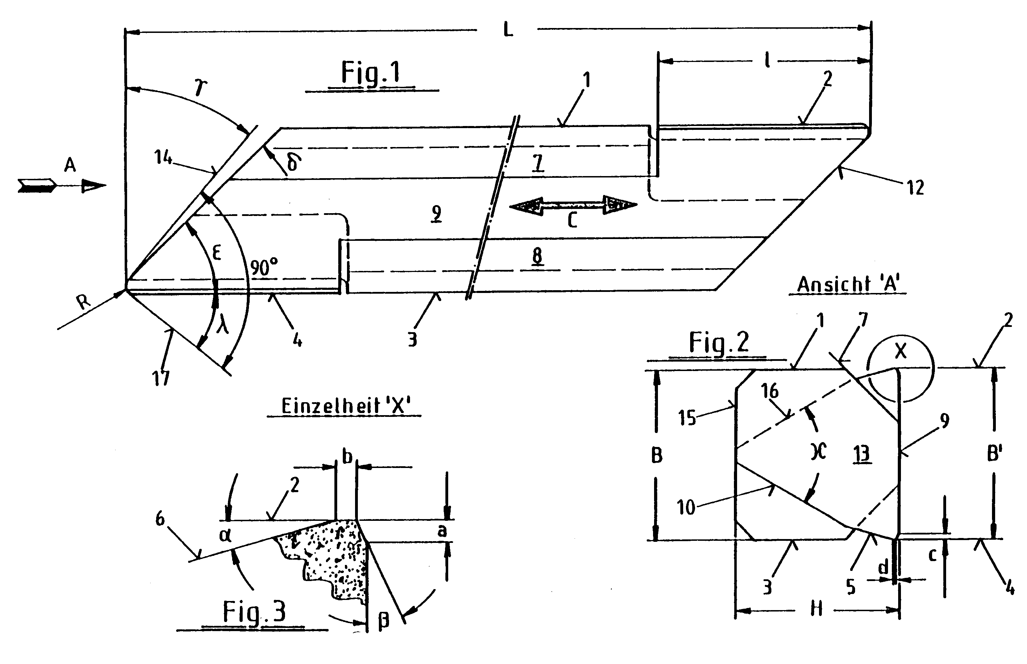

Wie aus Fig. 1 ersichtlich ist, weist der erfindungsgemäße Fasschneideneinsatz einen länglichen Körper mit einer Längsachse L auf, der im, aus Fig. 2 ersichtlichen, Querschnitt gesehen eine Vierkantform besitzt, über die eine spielfreie Verschiebung in C-Richtung in einer U-förmigen Aufnahme ermöglicht wird.

Die Positionierung des Fasschneideneinsatzes im Faskopf eines entsprechenden Bohr-/Faswerkzeugs (beispielsweise der in der WO-90/04474 beschriebenen Art) erfolgt über eine Senkschraube und ein Klemmstück, wobei über je eine der 45°-Flächen 7 bzw. 8 die Anlage des Fasschneideneinsatzes an der Auflagefläche 15 und den Seiten- bzw. Führungsflächen 3 bzw. 1 erfolgt.

An beiden Enden ist der Körper des Fasschneideneinsatzes an den Längskanten der Oberseite 9 seitenversetzt mit je einer Schneide 2 bzw. 4, von jeweils einer Länge 1, ausgestattet. Diese beiden Schneiden 2 und 4 sind auf einer eine Freiflächenfase bildenden Breite b bzw. d (kleiner 0,1 mm), in einer Ebene mit den Führungsflächen 1 bzw. 3 geschliffen (Körperbreite B $\equiv$ Schneidenabstand B'), so daß die Schneiden 2 und 4 immer sehr genau in der gleichen Lage mit einem minimalen Planschlag zu der diagonal im Faskopf gegenüberliegenden Schneide gespannt werden.

Die Schneiden 2 und 4 bzw. deren Schneidkeile, haben in an sich bekannter Weise eine Negativfase im Winkel $\beta$ von ca. 25° und von einer Breite a ( = Spannflächenfase) zur Stabilisierung und Erhöhung der Standzeit (Fig. 3), einen Freiwinkel $\alpha$ unter ca. 15°, gebildet durch die Flächen 5 bzw. 6 sowie einen Nebenfreiwinkel X unter einem Winkel 60°, gebildet durch die Flächen 10 bzw. 16.

Zur Verstärkung der Schneidenspitze ist diese in bekannter Weise mit einem Radius R von ca. 0,2 mm abgerundet.

Aus der Neigung der am Werkstück zu fertigenden Fase ergibt sich der Faswinkel von maximum 45°. Zwischen Stirnfläche 13 bzw. 12 des Fasschneideneinsatzes und Spiralrücken 14 des nicht eingezeichneten Spiralbohrers ist ein Winkel $\delta$ von ca. 2° vorgesehen, um die Anlage der Schneidenspitze am Spiralrücken zu sichern.

Die Summe der Winkel $\lambda + \delta + \Sigma = 90°$ Eine an sich bekannte Hartstoff-Beschichtung, insbesondere des Schneidkeils, bewirkt eine höhere Standzeit vor allem bei der Zerspanung von Stahl.

**Patentansprüche**

1. Fasschneideneinsatz für einen Faskopf eines Bohr-/Faswerkzeuges, dessen Körper an den Längskanten der Oberseite (9) endseitig seitenversetzt mit je einer Schneidkante (2 bzw. 4) von der Länge (1) versehen sind, die auf einen Schneidkantenabstand (B') zueinander angeordnet sind, wobei an den Längskanten der Oberseite (9) neben den Schneidkanten Schräg-Spannflächen (7 und 8) angeordnet sind, die bezüglich der Oberseite (9) als 45°-Spannflächen ausgebildet sind, **dadurch gekennzeichnet**,
   - daß der Fasschneideneinsatz als ein Vierkant-Körper (B X H) ausgebildet ist, mit der Oberseite (9), einer dieser gegenüber liegenden Auflagefläche (15) und zwei auf Körperbreite zueinander gegenüberliegenden Seiten- bzw. Führungsflächen (1 und 2), wobei die Auflagefläche und die Seiten- bzw. Führungsflächen zum spielfreien Zusammenwirken mit einem im Faskopf vorgesehenen U-förmigen Aufnahme- und Führungsprofil ausgelegt sind,
   - daß jede Schneidkante in eine Freiflächenfase (b, d) übergeht, die an eine mit der Oberseite (9) einen spitzen Winkel bildende Freifläche grenzt,
   - und daß die auf Körperbreite (B) zueinander liegenden Führungsflächen (1 und 3) des Fasschneideneinsatzes und die auf Schneidkantenabstand (B') zueinander liegenden Freiflächenfasen (b, d) der Schneidkanten (2, 4) jeweils zueinander maß- und toleranzgleich und in gleicher Ebene liegend angeordnet sind.

2. Fasschneideneinsatz nach Anspruch 1, dadurch gekennzeichnet, daß die Schneidkeile der Schneiden (2 und 4) mit deren Negativfase (a bzw. c) im Winkel $\beta$ und Freiwinkel $\alpha$, und die Oberseite (9), die Auflagefläche (15) und die Führungsflächen (1, 3) bearbeitet, während die übrigen Flächen des Preßrohlings (7, 8, 10, 12, 13 und 16) unbearbeitet sind.

3. Fasschneideneinsatz nach den Ansprüchen 1 und 2, dadurch gekennzeichnet, daß zwecks Erhöhung der Standzeit an den Schneidkeilen der Schneiden (2 und 4) eine an sich bekannte dünne Beschichtung mit Hartstoff, insbesondere Titannitrid, vorgesehen ist.

**Claims**

1. A bevelling cutter bit for a bevelling-head of a drill/chamfer tool, its body being provided on the longitudinal edges of the upper face (9) with respective cutting edges (2 resp. 4) of length (1) offset to the side at the end and arranged with respect to one another at a cutting-edge pitch (B'), oblique clamping-areas (7 and 8) being arranged on the longitudinal edges of the upper face (9) next to the cutting edges and formed with respect to the upper face (9) as 45°-clamping-areas, **characterized**
   - in that the bevelling cutter bit is made as a square body (B x H) having the upper face (9), a bearing area (15) lying opposite the latter and two side or guide areas (1 and 2) lying opposite one another at the width of the body, the bearing area and the side or guide areas being designed for cooperating free from play with a U-shaped receiver and guide profile provided in the bevelling-head,
   - in that each cutting edge continues into a flank land (b, d) which adjoins a flank forming an acute angle with the upper face (9),
   - and in that the guide areas (1 and 3) of the bevelling cutter bit lying at the width (B) of the body from one another and the flank lands (b, d) of the cutting edges (2, 4) lying at the cutting edge pitch (B') from one another are in each case arranged lying in one and the same plane at the same dimension and tolerance with respect to one another.

2. A bevelling cutter bit as in Claim 1, characterized in that the cutting wedges of the cutting edges (2 and 4) with their negative bevel (a resp. c) at the angle $\beta$ and relief angle $\alpha$, and the upper face (9), the bearing area (15) and the guide areas (1, 3) are machined, whilst the remaining areas (7, 8, 10, 12, 13 and 16) of the press blank are unmachined.

3. A bevelling cutter bit as in Claims 1 and 2, characterized in that for the purpose of prolonging the service life of the cutting wedges of the cutting edges (2 and 4) a thin coating, known in itself, is provided of mechanically resistant material, in particular titanium nitride.

**Revendications**

1. Insert de coupe à chanfreiner pour une tête de chanfreinage d'un outil de perçage/chanfreinage, dont les corps comporte, sur les arêtes longitudinales de la face supérieure (9) et d'une manière décalée latéralement à l'extrémité, des arêtes de coupe respectives (2 et 4) de longueur 1, qui sont à une distance mutuelle (B'), et dans lequel sur les arêtes longitudinales de la face supérieure (9) sont disposées, en plus des arêtes de coupe, des surfaces obliques de blocage (7 et 8), qui sont réalisées sous la forme de surfaces de blocage qui font un angle de 45° avec la face supérieure (9), caractérisé par le fait

- que l'insert de coupe à chanfreiner est réalisé sous la forme d'un corps à quatre pans (B X H), comportant la face supérieure (9), une surface d'application (15) opposée à cette face et deux surfaces latérales et de guidage (1 et 2), mutuellement opposées sur la largeur du corps, la surface d'application et les surfaces latérales et de guidage étant agencées de manière à coopérer, sans jeu, avec un profil de logement et de guidage en forme de U, prévu dans la tête de chanfreinage,

- que chaque arête de coupe se transforme en un pli de face en dépouille (b, d), qui jouxte une surface en dépouille qui fait un angle aigu avec la face supérieure (9), et

- que les surfaces de guidage (1 et 3), qui sont situées à l'opposé l'une de l'autre à une distance égale à la largeur (B) du corps et les plis de face en dépouille (b, d) des arêtes de coupe (2, 4), qui sont de la distance des arêtes de coupe (B'), sont disposés les uns par rapport aux autres respectivement avec des cotes et des tolérances identiques et s'étendent dans le même plan.

2. Insert de coupe à chanfreiner suivant la revendication 1, caractérisé par le fait que les taillants des arêtes de coupe (2 et 4) avec leur pli négatif (a et c) suivant l'angle $\beta$ et l'angle de dépouille $\alpha$ et la face supérieure (9), la surface d'application (15) et les surfaces de guidage (1, 3) sont usinés, tandis que les autres surfaces de l'ébauche pressée (7, 8, 10, 12, 13 et 16) ne sont pas usinées.

3. Insert de coupe à chanfreiner suivant les revendications 1 et 2, caractérisé par le fait que pour accroître la durée de vie, il est prévu sur les taillants des arêtes de coupe (2 et 4), un revêtement mince, connu en soi, en un matériau dur, notamment en nitrure de titane.

Fig.1

Einzelheit 'X'

Fig.3

Ansicht 'A'

Fig.2

EP 0 493 580 B1